# EUROPÄISCHE PATENTSCHRIFT

(11) **EP 3 440 721 B1**
(45) Veröffentlichungstag und Bekanntmachung des Hinweises auf die Patenterteilung: **19.02.2020**
(21) Anmeldenummer: 16790895.3
(22) Anmeldetag: 12.10.2016
(51) Int. Cl.: B60L 50/60, H01M 2/10, H01M 10/613, H01M 10/625, H01M 10/6563, B62J 1/00, B62K 19/36, B62K 19/46, B60L 3/00, B62J 1/28, B62K 19/30, H01M 10/42, H01M 10/6556, H01M 10/6561, B60L 53/16, B60L 53/80, B60L 58/26, B60L 50/64

(54) **BATTERIEBAUGRUPPE MIT RESONANZLAUTSPRECHER UND MOTORFAHRZEUG, INSBESONDERE MOTORROLLER**
BATTERY MODULE WITH RESONATING LOUD SPEAKER AND MOTOR VEHICLE, IN PARTICULAR A SCOOTER
MODULE DE BATTERIE AVEC HAUT-PARLEUR À RÉSONANCE ET VÉHICULE MOTORISÉ, EN PARTICULIER UN SCOOTER

(30) Priorität: 06.04.2016 WO PCT/EP2016/057500
(43) Veröffentlichungstag der Anmeldung: 13.02.2019
(73) Patentinhaber: UJET S.A., 3364 Leudelange (LU)
(72) Erfinder: KOROPACHINSKY, Yuri, Point Piper, NSW 2027 (AU); DAVID, Patrick, 89134 Blaustein (DE)
(74) Vertreter: Würmser, Julian
(86) Internationale Anmeldenummer: PCT/EP2016/074421
(87) Internationale Veröffentlichungsnummer: WO 2017/174162

(56) Entgegenhaltungen:
- WO-A1-02/43254
- WO-A1-2015/092818
- JP-A- H05 169 981
- US-A1- 2012 081 220
- US-A1- 2014 176 325

## Beschreibung

Die Erfindung betrifft eine Batteriebaugruppe, insbesondere für ein elektrisch angetriebenes Motorfahrzeug, insbesondere Motorrad, vorzugsweise Motorroller, gemäß Patentanspruch 1. Des Weiteren betrifft die Erfindung ein elektrisch angetriebenes Motorfahrzeug, insbesondere Motorrad, vorzugsweise Motorroller, umfassend mindestens eine Batteriebaugruppe, gemäß Patentanspruch 10.

Mit elektrischen Antrieben ausgestattete Motorräder bzw. Motorroller sind bekannt. Rein exemplarisch wird auf die EP 1 857 314 A2 verwiesen. Entsprechende elektrisch angetriebene Motorräder bzw. Motorroller haben üblicherweise eine Karosserie und mindestens zwei Räder, wobei eines der Räder über einen elektrischen Antrieb angetrieben wird, der über eine Batterie gespeist wird. Für das Laden einer Batterie wird wesentlich mehr Zeit benötigt als für das Volltanken von mit einer Brennkraftmaschine betriebenen Motorfahrzeugen. Insofern soll das Laden einer wiederaufladbaren Batterie möglichst dann erfolgen, wenn das elektrische Motorfahrzeug auf absehbare Zeit nicht benötigt wird. Das Motorfahrzeug/der Motorroller kann in dieser Ladezeit der Batterie nicht genutzt werden. US 2012/081220 beschreibt einen Motorroller, bei dem mit einem Hornlautsprecher, der an einem Batteriegehäuse befestigt ist, Töne erzeugt werden können.

Bei entsprechenden Motorfahrzeugen ist die Belüftung bzw. Kühlung der Batteriegruppe problematisch. So ist es notwendig, in Abhängigkeit von der erbrachten Leistung stärker oder weniger stark zu kühlen. Es ist bekannt in diesem Zusammenhang Ventilatoren zu betreiben, um eine geeignete Luftzirkulation sicherzustellen.

Ausgehend von diesem Stand der Technik ist es Aufgabe der vorliegenden Erfindung, eine verbesserte Batteriebaugruppe bereitzustellen. Insbesondere soll die Batteriebaugruppe hochfunktional sein/oder die Sicherheit bei der Nutzung erhöhen.

Die angegebene Aufgabe wird erfindungsgemäß durch die Batteriebaugruppe gemäß Anspruch 1 sowie durch das Motorfahrzeug gemäß Anspruch 10 gelöst.

Insbesondere wird die Aufgabe durch eine Batteriebaugruppe gelöst, die umfasst:
- mindestens ein Batteriegehäuse
- mindestens eine, insbesondere wiederaufladbare, Batterie;
- mindestens einen Resonanzlautsprecher, der über überhaupt keine eigene Membran verfügt und derart an einem Abschnitt des Batteriegehäuses angeordnet ist, dass zumindest ein Teil des Batteriegehäuses zum Schwingen angeregt wird, um als Lautsprechermembran zu dienen.

Die Batteriebaugruppe kann in Verbindung mit einem elektrisch antreibbaren Motorfahrzeug, insbesondere einem Motorrad eingesetzt werden. Bevorzugt wird die erfindungsgemäße Batteriebaugruppe in Verbindung mit einem Motorroller verwendet.

In der vorliegenden Anmeldung werden die Begriffe "Resonanzlautsprecher" und "Vibrationslautsprecher" synonym verwendet. Der mindestens eine erfindungsgemäße Resonanzlautsprecher verfügt über überhaupt keine eigene Membran. Er ist dazu ausgebildet, Körper, die kein Teil des Resonanzlautsprechers sind, derart anzuregen, dass diese Körper als Lautsprechermembran dienen. In der erfindungsgemäßen Ausgestaltung wird mindestens ein Abschnitt des Batteriegehäuses von mindestens einem Resonanzlautsprecher derart angeregt, dass dieser Teil des Batteriegehäuses als Lautsprechermembran fungiert.

Das Anregen eines Teils des Batteriegehäuses hat mehrere Vorteile. Zum einen kann hierdurch eine verbesserte Kühlung der Batterie gewährleistet werden. Zum anderen kann durch eine entsprechende Anordnung eine sehr vorteilhafte Klangqualität erzielt werden, wobei die ausgegebenen Töne auch während des Fahrens mit dem Motorfahrzeug noch wahrnehmbar sind. Letztendlich ermöglicht die Anordnung des mindestens einen Resonanzlautsprechers innerhalb der Batteriegruppe auch, dass hier eine sehr robuste und autarke Einheit geschaffen wird, die ggf. auch unabhängig von dem Motorfahrzeug betrieben werden kann. Die Batterie, die vorzugsweise zum Antreiben des Motorfahrzeugs dient, kann gleichzeitig den Resonanzlautsprecher und zugehöriges Equipment versorgen.

In einer Ausführungsform sind mindestens zwei Resonanzlautsprecher vorgesehen. Mit mindestens zwei Resonanzlautsprechern kann eine große Fläche des Batteriegehäuses zum Schwingen angeregt werden. Dies hat Vorteile hinsichtlich der Klangqualität, der Lautstärke und auch hinsichtlich der erbrachten Luftzirkulationsleistung.

In einer Ausführungsform sind die Resonanzlautsprecher wechselseitig, insbesondere links und rechtseitig in Bezug auf die Fahrrichtung des Motorfahrzeugs angeordnet. Insofern kann ein qualitativ hochwertiger Stereosound hergestellt werden.

In einer Ausführungsform umfasst die Batteriegruppe mindestens einen Kühlungskanal, der sich vorzugsweise seitlich durch das Innere der Batteriegruppe erstreckt. Der Kühlungskanal kann mindestens einen Lufteinlass und mindestens einen Luftauslass umfassen. Vorzugsweise ist der Kühlungskanal derart angeordnet und ausgebildet, dass er entlang der Batterie zu deren Kühlung verläuft.

Der mindestens eine Resonanzlautsprecher kann sich innerhalb des Kühlungskanals befinden. Zumindest ist der Resonanzlautsprecher derart angeordnet und/ausgebildet, dass er mindestens einen Abschnitt des Kühlungskanals zum Schwingen anregt, um die Luftzirkulation zu verbessern. Das Anordnen des mindestens einen Resonanzlautsprechers im Kühlungskanal hat den Vorteil, dass der Kühlungskanal als Klangkörper für den Resonanzlautsprecher genutzt werden kann. Weiterhin erhöht sich hierdurch der Luftdurchsatz.

In einer Ausführungsform sind zwei Kühlungskanäle vorgesehen, die wechselseitig der Batterie verlaufen.

In einer Ausführungsform umfasst die Batterie eine Batteriekapsel, in der die Batteriezellen und/oder Batteriepacks angeordnet sind. Bei der Batteriekapsel kann es sich um einen Batteriekoffer handeln. In einer Ausführungsform ist die Batteriekapsel wasserfest oder zumindest spritzfest.

Die Batteriekapsel besteht vorzugsweise aus einem robusteren Material als das Batteriegehäuse. Vorzugsweise ist die Batteriekapsel so stabil, dass sie als Trägerstruktur dient und die auf eine Sitzfläche des Sattels aufgebrachten Lasten an die Karosserie übertragen kann. Die Batteriekapsel kann zumindest teilweise aus einem wärmeleitfähigen Material hergestellt sein. Vorzugsweise bildet die Batteriekapsel eine Wärmebrücke für Akkusätze bzw. Batteriezellen bzw. die Batteriepacks. In einer Ausführungsform ist die Batteriekapsel aus Metall, beispielsweise einer Aluminiumlegierung ausgebildet.

In einer Ausführungsform ist die Batteriekapsel im Wesentlichen aus einem wärmeleitfähigen Material hergestellt.

Der Begriff im Wesentlichen kann in Verbindung mit dem wärmeleitfähigen Material so verstanden werden, dass zumindest 50 % des Materials keine hohe Wärmeleitfähigkeit hat. Den 50 Prozent können das Gesamtvolumen und/oder das Gesamtgewicht des für die Batteriekapsel verwendeten Materials zugrundegelegt werden.

Das Batteriegehäuse kann zumindest teilweise aus einem Material hergestellt werden, das eine wesentlich geringere Wärmeleitfähigkeit als die Batteriekapsel hat. Auch hinsichtlich der Tragfähigkeit kann das verwendete Material so gewählt werden, dass es keine signifikante Stabilität beiträgt. In einer Ausführungsform dient das Batteriegehäuse zur Verkleidung, während die Batteriekapsel ein tragendes Strukturelement ist. Das Batteriegehäuse kann zumindest teilweise aus Kunststoff hergestellt sein. In einer Ausführungsform ist ein wesentlicher Bestandteil des Batteriegehäuses Kunststoff.

In einer Ausführungsform umfasst die Batteriekapsel Lamellen bzw. Kühlrippen. Die Batteriekapsel kann derart innerhalb der Batteriebaugruppe angeordnet sein, dass zumindest einige dieser Lamellen in den mindestens einen Kühlungskanal hineinragt. In einer bevorzugten Ausführungsform ist der Kühlungskanal derart ausgebildet, dass die Lamellen oder Kühlrippen entlang der vorgesehenen Strömungsrichtung verlaufen, so dass ein maximaler Wärmeaustausch gewährleistet wird.

Der Lufteinlass des mindestens einen Kühlungskanals kann im unteren Bereich der Batteriebaugruppe vorgesehen sein. Im am Fahrzeug angeordneten Zustand kann dieser Lufteinlass relativ nahe am Boden vorgesehen sein. Vorzugsweise ist der Lufteinlass in Fahrtrichtung im vorderen Bereich der Batteriegruppe vorgesehen. Ein entsprechendes Anordnen des Lufteinlasses hat den Vorteil, dass die gesamte Batteriebaugruppe durchströmt wird. Weiterhin kann der Fahrtwind vorteilhaft zur Kühlung eingesetzt werden.

In einer Ausführungsform umfasst die Batteriebaugruppe einen Verstärker zum Betreiben des Resonanzlautsprechers. Der Verstärker kann die zu dessen Versorgung notwendige Energie von der Batterie beziehen. In einer Ausführungsform ist weiterhin ein Funkmodul vorgesehen, dass Audiosignale an den Verstärker liefert. Bei diesem Funkmodul kann es sich um ein Bluetooth-Modul handeln. Insofern ist es möglich, die oder den Lautsprecher kabellos mit einem beispielsweise tragbaren Endgerät zu betreiben.

In einer Ausführungsform umfasst die Batteriebaugruppe:
- mindestens ein Batteriegehäuse;
- mindestens eine, insbesondere wiederaufladbare, Batterie;
- mindestens eine lösbare mechanische Verriegelung zur Verbindung des Batteriegehäuses mit einer mit elektrischer Energie zu versorgenden Einheit, insbesondere zur Verbindung mit einem elektrischen Motorroller; und
- mindestens eine Ständervorrichtung, die ausklappbar und/oder ausschwenkbar und/oder ausziehbar ausgebildet ist.

Erfindungsgemäß ist es somit möglich, dass die Batteriebaugruppe in einem von der zu versorgenden Einheit losgelösten Zustand mittels der Ständervorrichtung einfach abgestellt werden kann.

Insbesondere ermöglicht es die Ständervorrichtung, dass die Batteriebaugruppe in einem von der zu versorgenden Einheit losgelösten Zustand mittels der Ständervorrichtung als eine Sitzgelegenheit, insbesondere als Hocker, verwendet werden kann.

Es ist möglich, dass die Ständervorrichtung teleskopierbar ist. Vorzugsweise ist in diesem Fall die Ständervorrichtung in einem zusammgengeschobenen, d.h. im nicht-teleskopierten Zustand, zumindest teilweise innerhalb des Batteriegehäuses angeordnet.

In einem mit der zu versorgenden Einheit verbundenen Zustand der Batteriebaugruppe ist die Ständervorrichtung vorzugsweise eingeklappt und/oder eingeschwenkt und/oder eingefahren.

Sofern die Ständervorrichtung ausschwenkbar und/oder ausklappbar ausgebildet ist, kann diese mit dem Batteriegehäuse beispielsweise mittels Drehgelenk und/oder mittels Scharnier verbunden sein.

Die Ständervorrichtung kann beispielsweise aus mindestens einen Standbein bestehen. Das Standbein kann aus einem Rohr, beispielsweise aus einem Rundrohr oder einem Vierkant-Rohr, gebildet sein. Des Weiteren ist es möglich, dass das Standbein massiv, d.h. ohne Ausbildung eines hohlen Abschnitts, ausgebildet ist.

Das mindestens eine Standbein kann an einem Längsende einen Flansch, insbesondere einen Querflansch, aufweisen. Der Flansch, insbesondere der Querflansch, ermöglicht eine Krafteinleitung bei ausgeklappten und/oder ausgeschwenkten und/oder ausgezogenen Zustand der Ständervorrichtung. Außerdem verhindert ein Flansch, insbesondere ein Querflansch, ein Einsinken der Ständervorrichtung in eine Abstellfläche, insbesondere in einen unbefestigten und/oder feuchten Boden. Alternativ oder zusätzlich kann an einem Längsende eine Puffer, insbesondere ein Gummipuffer, ausgebildet sein.

Die Ständervorrichtung kann beispielsweise mindestens zwei Standbeine umfassen, wobei die Standbeine vorzugsweise über mindestens eine Querstrebe miteinander verbunden sind.

Sofern die Ständervorrichtung ausschwenkbar ausgebildet ist, können die Standbeine jeweils an einem Längsende mittels eines Drehgelenks und/oder mittels eines Scharniers mit dem Batteriegehäuse verbunden sein. Vorzugsweise sind an den weiteren Längsenden der Standbeine Flansche, insbesondere Querflansche, oder Puffer, insbesondere Gummipuffer, ausgebildet.

Auch bei der Ausbildung von mehreren Standbeinen ist es möglich, dass diese aus einem Rohr, beispielsweise aus einem Rundrohr oder einem Vierkantrohr, gebildet sind. Des Weiteren ist es möglich, dass die Standbeine massiv, d.h. ohne Ausbildung eines hohlen Abschnitts, ausgebildet sind. Es ist möglich, dass die Standbeine lediglich aus einem Abschnitt bestehen. Der Abschnitt kann sowohl gerade als auch gebogen sein. In einer weiteren Ausführungsform der Erfindung ist es möglich, dass die Standbeine jeweils zwei schräg zueinander angeordnete oder ausgebildete Ausschnitte umfassen.

Des Weiteren ist mindestens eine Querstrebe vorgesehen. Die Querstrebe stabilisiert die Ständervorrichtung. Des Weiteren ist es möglich, dass mindestens zwei Querstreben ausgebildet sind.

Ein Standbein oder die Standbeine kann/können im Sinne eines Radsturzes angeordnet sein. Zwischen den Senkrechten zur Abstellfläche und der Standbeinmittelelebene kann ein Winkel ausgebildet sein. Vorzugsweise ist ein Standbein oder sind die Standbeine im Sinne eines negativen Sturzes angeordnet. Mit anderen Worten kann mindestens ein Standbein, ausgehend vom Befestigungspunkt des Standbeins am Batteriegehäuse in Richtung der Abstellfläche nach schräg außen verlaufen. Dies ermöglicht einen besseren Stand der Batteriebaugruppe mit ausgeklappter und/oder ausgeschwenkter und/oder ausgezogener Ständervorrichtung.

Die Ständervorrichtung kann in einem ausgeklappten und/oder ausgeschwenkten und/oder ausgezogenen Zustand mittels einer Spannvorrichtung gesichert sein. Beispielsweise kann es sich bei der Spannvorrichtung um ein federartiges Element handeln.

Die Spannvorrichtung ist vorzugsweise an einem Ende am Batteriegehäuse, insbesondere an einer Gehäuseverstärkung, befestigt. An dem weiteren Ende ist die Spannvorrichtung vorzugsweise mit der Ständervorrichtung verbunden. Dabei ist es möglich, dass die Spannvorrichtung mit einem Standbein und/oder mit einer Querstrebe verbunden ist. Vorzugsweise ist die Spannvorrichtung an einem Ende mit dem Batteriegehäuse und am weiteren Ende mit einer Querstrebe der Ständervorrichtung verbunden.

Die Spannvorrichtung ist vorzugsweise derart ausgebildet, dass diese das maximale Ausklappen und/oder Ausschwenken und/oder Ausziehen der Ständervorrichtung begrenzt. Somit wird im ausgeklappten und/oder ausgeschwenkten und/oder ausgezogenen Zustand eine weitere Bewegung der Ständervorrichtung, insbesondere eines Standbeins der Ständervorrichtung, verhindert.

Vorzugsweise umfasst die Spannvorrichtung mindestens ein elastisches Element und mindestens ein starres oder teilelastisches Element. Ein starres oder teilelastisches Element begrenzt die maximale Ausdehnung der Spannvorrichtung. Damit ermöglicht ein starres oder teilelastisches Element einen maximalen Bewegungsradius der Ständervorrichtung. Das elastische Element ermöglicht ein einfaches Einklappen und/oder Einschwenken und/oder Einziehen der Ständervorrichtung. Sofern auf die Ständervorrichtung keine Kraft ausgeübt wird und in Richtung der ursprünglichen Position, d.h. der eingeklappten und/oder eingeschwenkten und/oder eingezogenen Position bewegt wird, ermöglicht das elastische Element ein kraftschonendes Einklappen und/oder Einschwenken und/oder Einziehen der Ständervorrichtung. Die zunächst gespannte/vorgespannte Spannvorrichtung wird aufgrund des elastischen Elements zurückgezogen.

In einer Ausführungsform der Erfindung kann die Spannvorrichtung als Gummiband und/oder Seilzug ausgebildet sein. Insbesondere ist die Spannvorrichtung als ein Seilzug, der von einem gummiartigen Material umgeben ist, ausgebildet. Der Seilzug stellt ein starres oder teilelastisches Element dar. Das gummiartige Material stellt hingegen ein elastisches Element dar.

Das Batteriegehäuse kann eine Gehäuseverstärkung aufweisen, die insbesondere im Bereich eines Bodenabschnitts des Batteriegehäuses ausgebildet ist. Die Gehäuseverstärkung kann aus entsprechend robusterem Material und/oder entsprechend umgeformtem Material hergestellt sein. Vorzugsweise ist die Gehäuseverstärkung in Form einer abgewinkelten und/oder gebogenen Schiene ausgebildet. Diese Schiene kann insbesondere mit dem Bodenabschnitt des Batteriegehäuses verbunden sein.

Die Gehäuseverstärkung ermöglicht es, die Batteriebaugruppe auch im von der zu versorgenden Einheit getrennten Zustand als Sitzgelegenheit benutzen zu können.

Es ist auch möglich, dass das Batteriegehäuse mindestens eine Ausnehmung aufweist, wobei die Ständervorrichtung im eingeklappten und/oder eingeschwenkten und/oder eingezogenen Zustand in der mindestens einen Ausnehmung gelagert werden kann. Außerdem ist es möglich, dass die Ständervorrichtung eine zu einer möglicherweise ausgebildeten Gehäuseverstärkung komplementäre Form aufweist. Die Ständervorrichtung kann im unbenutzten Zustand somit als Teil der Gehäuseaußenwandung ausgebildet sein. Die Ständervorrichtung kann eine abgewinkelte und/oder gebogene Form aufweisen.

Des Weiteren ist es möglich, dass die Ständervorrichtung an der Gehäuseverstärkung befestigt ist. Ein Drehgelenk und/oder ein Scharnier und/oder ein Befestigungsabschnitt der Ständervorrichtung kann/können mit der Gehäuseverstärkung verbunden sein. Dies verhindert eine Krafteinleitung der Ständervorrichtung in einen lediglich aus Kunststoff bestehenden Batteriegehäuseabschnitt.

Vorzugsweise ist ein Sattel der Batteriebaugruppe in einem aufgeständerten Zustand, dh mit ausgeklappter und/oder ausgeschwenkter und/oder ausgefahrener Ständervorrichtung, im gleichen Winkel wie im Fahrmodus oder Fahrzustand der Batteriebaugruppe ausgerichtet. Mit anderen Worten ist die Ständervorrichtung derart angeordnet und/oder ausgebildet, dass der (längliche) Sattel in einem ausgeklappten und/oder ausgeschwenkten und/oder ausgezogenen Zustand der Ständervorrichtung (im Wesentlichen) waagrecht zu einer Abstellfläche verläuft.

Im Batteriegehäuse ist vorzugsweise ein Stromkreis ausgebildet.

In einer weiteren Ausführungsform der Erfindung umfasst die Batteriebaugruppe mindestens ein Betätigungselement, das aus dem Batteriegehäuse ausklappbar und/oder ausschwenkbar und/oder ausziehbar, insbesondere teleskopierbar, ausgebildet ist.

Die Batteriebaugruppe mit einem ausziehbaren und/oder ausklappbaren und/oder ausschwenkbaren Betätigungselement betätigt, insbesondere gezogen bzw. geschoben, werden kann.

Das Betätigungselement kann als Hebel oder als Griff, insbesondere als Bügelgriff, ausgebildet sein. Der Griff weist vorzugsweise einen Greifabschnitt, der insbesondere mit der vollständigen Hand umgreifbar ist, auf. Vorzugsweise geht der Greifabschnitt in mindestens einen, vorzugsweise in zwei, Verlängerungsabschnitt(e) über. Bei dem mindestens einen Verlängerungsabschnitt kann es sich um ein stangenartiges bzw. schienenartiges Element handeln. Dieses stangenartige bzw. schienenartige Element ist insbesondere im bzw. am Batteriegehäuse ausklappbar und/oder ausschwenkbar und/oder ausziehbar, insbesondere teleskopierbar, gelagert.

In einem ersten Benutzungszustand, der dem Fahrzustand eines elektrisch antreibbaren Motorfahrzeugs, insbesondere eines elektrischen Motorrollers, entspricht, ist der Verlängerungsabschnitt vorzugsweise vollständig im Batteriegehäuse gelagert.

In einem weiteren Benutzungszustand, der dem vom Motorfahrzeug, insbesondere vom Motorroller, losgelösten Zustand der Batteriebaugruppe entspricht, kann der mindestens eine Verlängerungsabschnitt aus dem Gehäuse ausgeklappt und/oder ausgeschwenkt und/oder ausgezogen werden, so dass das Betätigungselement in einem zumindest teilweise ausgeklappten und/oder ausgeschwenkten und/oder ausgezogenen, insbesondere teilweise teleskopierten, Zustand vorliegt. Dies ist mit einem ausgezogenen Griff eines Koffers bzw. Trolleys vergleichbar.

Ein ausgeklapptes und/oder ausgeschwenktes und/oder ausziehbares, insbesondere teleskopierbares, Betätigungselement erleichtert somit die Handhabung einer von einem Motorroller gelösten Batteriebaugruppe. Die Batteriebaugruppe kann mit Hilfe des Betätigungselements beispielsweise zu einer Ladestation gezogen werden. In einem besonders bevorzugten Ausführungsbeispiel ist das Betätigungselement als Bügelgriff ausgebildet.

Das Batteriegehäuse kann einen Frontabschnitt, einen Rückabschnitt, zwei die Front- und Rückenabschnitte verbindende Seitenabschnitt, einen Deckelabschnitt und einen Bodenabschnitt umfassen.

Es ist möglich, dass am Batteriegehäuse mindestens eine Rolle ausgebildet ist. Besonders bevorzugt sind am Batteriegehäuse mindestens zwei Rollen angeordnet. Diese sind vorzugsweise am Frontabschnitt bzw. am Übergangsabschnitt vom Frontabschnitt zum Bodenabschnitt des Batteriegehäuses ausgebildet.

Mit Hilfe von mindestens zwei Rollen kann die Batteriebaugruppe besonders gleichmäßig gezogen werden. Die Rollen können Teil der beschriebenen Führungsvorrichtung der Batteriegruppe sein und/oder diese Funktion übernehmen. Die Rollen können also das Anordnen der Batteriegruppe an der zu versorgenden Einheit erleichtern und beim Anordnen in der Führungsvorrichtung der zu versorgenden Einheit geführt sein.

Die mindestens eine Rolle kann im Batteriegehäuse versenkbar ausgebildet sein. Nach einem Transportieren, insbesondere einem Ziehen, der Batteriebaugruppe kann die mindestens eine Rolle versenkt werden, sodass ein Wegrollen der Batteriebaugruppe verhindert wird.

Insbesondere bei einem ausgeklappten und/oder ausgeschwenkten und/oder ausgezogenen Zustand der Ständervorrichtung kann mit Hilfe einer im Batteriegehäuse versenkten Rolle ein sicherer Stand der Batteriebaugruppe ermöglicht werden.

In einer weiteren Ausführungsform der Erfindung weist das Batteriegehäuse im Bereich des Betätigungselements, insbesondere im Rückabschnitt, eine Eingriffsausnehmung auf, die derart ausgebildet ist, dass das Betätigungselement mit einer Hand umgreifbar ist. Im mit dem Motorroller verbundenen Zustand der Batteriebaugruppe erstreckt sich der Greifabschnitt des Betätigungselements vorzugsweise quer zur Fahrtrichtung. Das Batteriegehäuse weist eine derartige Ausnehmung bzw. Eingriffsausnehmung auf, dass das Betätigungselement im Klammergriff gezogen, insbesondere hochgezogen, werden kann.

Vorzugsweise weist die Batteriebaugruppe zwei Kühlungskanäle auf. Diese können im Wesentlich seitlich verlaufen. D.h., dass die Kühlungskanäle im Bereich von Seitenflächen des Batteriegehäuses verlaufen.

Die Batteriebaugruppe kann des Weiteren mindestens einen Stromstecker umfassen. Mit Hilfe eines Stromsteckers wird die Batteriebaugruppe elektrisch mit der elektrisch zu versorgenden Einheit, insbesondere mit dem elektrischen Motorroller, verbunden.

Vorzugsweise weist die Batteriebaugruppe einen kombinierten Strom-/ Kommunikationsstecker auf. Mit Hilfe eines derartigen Steckers kann die zu versorgende Einheit sowohl mit Strom versorgt werden bzw. von der Einheit Strom empfangen. Des Weiteren kann mit Hilfe eines derartigen kombinierten Strom-/Kommunikationssteckers eine Kommunikationsübertragung bzw. Kommunikationsverbindung zwischen der Batteriebaugruppe und der zu versorgenden Einheit hergestellt werden. Vorzugsweise weist der kombinierte Strom-/Kommunikationsstecker eine Bus-Schnittstelle auf.

Des Weiteren ist es möglich, dass die Batteriebaugruppe eine (separate) Kommunikationsbuchse aufweist.

Der kombinierte Strom-/Kommunikationsstecker ist beispielsweise an einem Seitenabschnitt des Batteriegehäuses ausgebildet. Die Pins des Strom-/ Kommunikationssteckers sind vorzugsweise senkrecht zu einer Bodenfläche ausgebildet. Die Verbindung des Strom-/Kommunikationssteckers mit einer Strom-/Kommunikationsbuchse einer elektrisch zu versorgenden Einheit, insbesondere eines elektrischen Motorrollers, kann demnach durch Aufschieben des Steckers auf die Buchse erfolgen.

Vorzugsweise ist eine mechanische Verriegelung der Batteriebaugruppe im Bodenabschnitt des Batteriegehäuses ausgebildet. Die mechanische Verriegelung kann beispielsweise als Verriegelungshaken ausgebildet sein. Die mechanische Verriegelung ist vorzugsweise durch ein Verriegelungs-Betätigungselement betätigbar

Bei dem Verriegelungs-Betätigungselement kann es sich beispielsweise um eine Schnur oder eine Kette oder ein Band oder eine Schlaufe handeln. Durch Zug an der Schnur oder der Kette oder an dem Band oder an der Schlaufe kann die mechanische Verriegelung, insbesondere der Verriegelungshaken, betätigt werden.

Wie bereits beschrieben kann die Batteriebaugruppe mindestens eine Bluetooth-Schnittstelle und/oder mindestens eine USB-Buchse umfassen. Es ist möglich, dass die mindestens eine Netzbuchse und/oder die mindestens eine Bluetooth-Schnittstelle und/oder die mindestens eine USB-Buchse innerhalb eines/des vorzugsweise verschließbaren und/oder verriegelbaren Fachs ausgebildet ist/sind. Dies ermöglicht einen Manipulationsschutz, so dass lediglich der Besitzer eines Schlüssels bzw. Zugangssystems zum Fach auf eine USB-Buchse und/oder eine Netzbuchse zugreifen kann und die mindestens eine Bluetooth-Schnittstelle ein- bzw. ausschalten kann.

Mit Hilfe einer USB-Buchse können Programme geladen werden. Auch das Auslesen eines Fehlerspeichers ist mit Hilfe einer USB-Buchse möglich. Des Weiteren kann mit Hilfe einer Bluetooth-Schnittstelle und/oder mit Hilfe einer USB-Buchse ein innerhalb der Batteriebaugruppe, insbesondere innerhalb des Batteriegehäuses, angeordneter Lautsprecher, insbesondere die Resonanzlautsprecher, angesteuert werden. Es ist möglich, dass über die Bluetooth-Schnittstelle und/oder über die USB-Buchse Audiodateien an die Batteriebaugruppe gesendet werden können.

Des Weiteren ist es möglich, dass die Batteriebaugruppe eine Schnittstelle zur Aufladung externer Geräte, insbesondere mobiler Kommunikationsgeräte, mit Strom aufweist. Die Aufladung erfolgt mittels der Batterie der Batteriebaugruppe. Des Weiteren ist es möglich, dass die Batteriebaugruppe eine Vorrichtung zur kontaktlosen Energieübertragung von der Batterie der Batteriebaugruppe zu einem externen Gerät aufweist.

Mit Hilfe der wahlweise vorhandenen Schnittstellen, Netzbuchsen, Bluetooth-Schnittstellen oder USB-Buchsen ist es möglich, die Batteriebaugruppe als eine Art mobiles Büro zu verwenden. Mit Hilfe der Ständervorrichtung ist es möglich, dass der Benutzer bequem auf der Batteriebaugruppe, insbesondere auf dem Sattel der Batteriebaugruppe sitzt, während er beispielsweise sein Laptop bedient. Dieses kann mit Hilfe der Batteriebaugruppe mit Strom versorgt werden.

In einer weiteren Ausführungsform der Erfindung kann auf dem Batteriegehäuse, insbesondere deckelabschnittsseitig, ein Sattel ausgebildet sein. Ein Sattel eines Motorrollers ist folglich als Element der Batteriebaugruppe ausgebildet. Der Sattel ist vorzugsweise mit dem Batteriegehäuse, insbesondere dem Deckelabschnitt des Batteriegehäuses verbunden, insbesondere verklebt und/oder verrastet. Der Sattel kann aus einem Schaumstoffmaterial gebildet sein.

Ein nebengeordneter Aspekt der Erfindung betrifft ein elektrisch angetriebenes Motorfahrzeug, insbesondere ein elektrisch angetriebenes Motorrad, insbesondere einen elektrischen Motorroller, umfassend mindestens eine erfindungsgemäße Batteriebaugruppe.

Die Batteriebaugruppe ist vorzugsweise an einem hinteren Rahmenteil des Motorrads, insbesondere des Motorrollers, lösbar befestigt bzw. lösbar verankert. Im eingebauten Zustand weist der Frontabschnitt des Batteriegehäuses in Fahrtrichtung bzw. in Richtung des Vorderrads des elektrischen Motorrads, insbesondere des elektrischen Motorrollers. Der Rückabschnitt des Batteriegehäuses weist vorzugsweise dementsprechend entgegen der Fahrtrichtung bzw. in Richtung des Hinterrads.

Das elektrische Motorrad, insbesondere der elektrische Motorroller, umfasst vorzugsweise ein mit der mechanischen Verriegelung zusammenwirkend ausgebildetes Verriegelungsgegenstück. Das Verriegelungsgegenstück ist vorzugsweise ein Verriegelungsbolzen bzw. eine Verriegelungsaufnahme für einen Verriegelungshaken.

Die Batteriegruppe und/oder das elektrisch angetriebene Motorfahrzeug können einen Tongenerator umfassen. Der Tongenerator kann mit dem Motorfahrzeug, beispielsweise dem Fahrzeugbus, in kommunikativer Verbindung stehen, um den Fahrzustand des Motorfahrzeugs zu erfassen. Erfindungsgemäß kann ein Fahrzustand Auskunft darüber geben, ob das Fahrzeug aktuell fährt oder steht. Zusätzlich oder stattdessen kann der Fahrzustand eine Geschwindigkeit, mit der das Fahrzeug bewegt wird, angegeben. Theoretisch können auch weitere Betriebszustände als Fahrzustand verstanden werden. Hierbei kann es sich beispielsweise um die Leistungsaufnahme des Motors und/oder eine Temperatur des Motors und/oder eine Temperatur der Batterie handeln. In einer Ausführungsform ist der Tongenerator derart ausgebildet, dass er in Abhängigkeit von dem erfassten Fahrzustand einen oder mehrere Töne unter Verwendung des mindestens einen Resonanzlautsprechers erzeugt. Beispielsweise kann eine lautere Tonsequenz erzeugt werden, wenn das Fahrzeug schneller fährt. Beim Fahrzeugstillstand kann ein leiser Grundton oder überhaupt kein Ton erzeugt werden.

Der erfindungsgemäße Tongenerator hat den Vorteil, dass der Benutzer des Motorfahrzeugs akustisch über den Fahrzustand informiert wird, so dass es nicht notwendig ist eine Anzeige zu betrachten. Weiterhin hat der Tongenerator den Vorteil, dass andere Verkehrsteilnehmer das Motorfahrzeug besser wahrnehmen.

Nachfolgend wird die Erfindung anhand von Ausführungsbeispielen für einen elektrisch antreibbaren Motorroller beschrieben, welche anhand von Abbildungen näher erläutert werden.

Hierbei zeigen:
- Fig. 1:: einen elektrisch angetriebenen Motorroller in perspektivischer Ansicht;
- Fig. 2:: den elektrisch betriebenen Motorroller der Fig. 1 in einer seitlichen Ansicht;
- Fig. 3:: eine Seitansicht auf eine erfindungsgemäße Batteriebaugruppe mit ausgeklappter Ständervorrichtung;
- Fig. 4a-4c:: verschiedene perspektivische Ansichten hinsichtlich einer erfindungsgemäßen Batteriebaugruppe, gemäß einer ersten Ausführungsform;
- Fig. 5:: eine transparente Ansicht hinsichtlich der im Batteriegehäuse der Batteriebaugruppe befindlichen Komponenten; und
- Fig. 6:: hinterer Rahmenteil ohne befestigte Batteriebaugruppe.
- Fig. 7:: eine Draufsicht auf den Sitz der Batteriegruppe;
- Fig. 8:: einen Schnitt durch den vorderen Teil der Batteriegruppe (quer zur Fahrrichtung);
- Fig. 9:: einige elektronische Komponenten der Batteriegruppe zum Betreiben von Resonanzlautsprechern.

In der nachfolgenden Beschreibung werden für gleiche und gleichwirkende Teile dieselben Bezugsziffern verwendet.

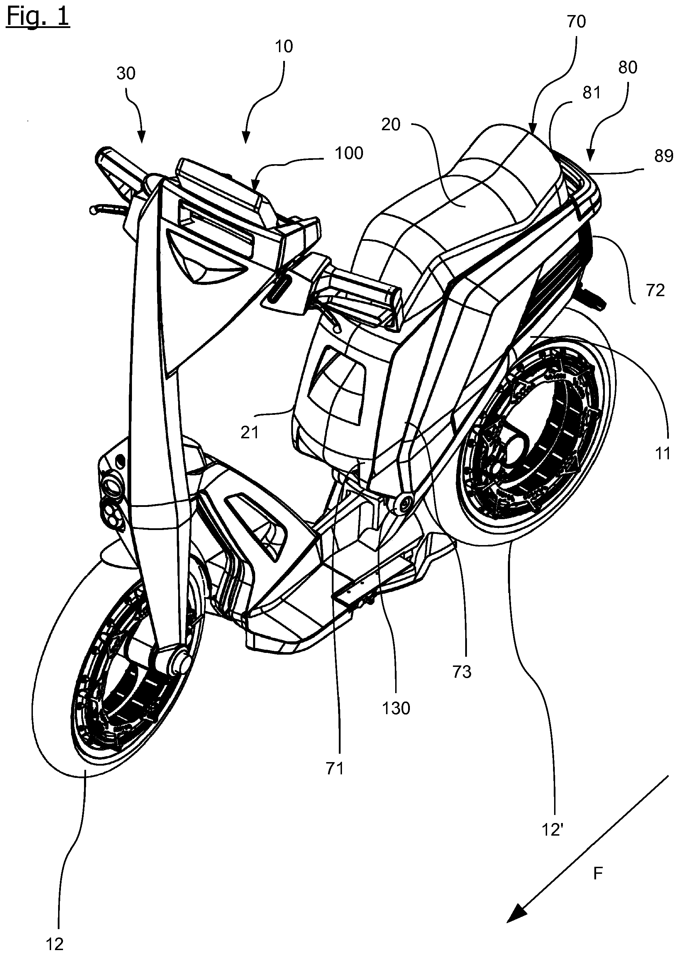

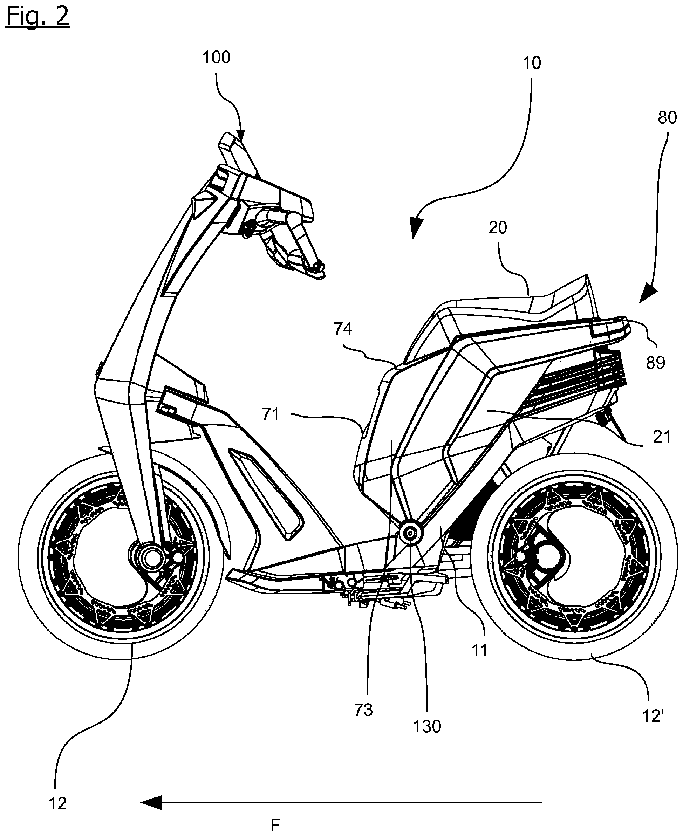

Fig. 1 und Fig. 2 zeigen eine Gesamtansicht eines erfindungsgemäßen Rollers bzw. elektrischen Motorrollers 10. Der Motorroller 10 hat eine Karosserie, an der ein Vorderrad 12 und ein Hinterrad 12' drehbeweglich befestigt sind. Des Weiteren umfasst die Karosserie eine Lenkeinrichtung 30, die ein Steuern des Motorrollers 10 ermöglicht. Am unteren Ende der Lenkeinrichtung 30 befindet sich das Vorderrad 12. Im rückwärtigen Teil, insbesondere am hinteren Rahmenteil 11, befindet sich eine Batteriebaugruppe 70 sowie ein zur Batteriebaugruppe 70 zugehöriges Batteriegehäuse 21. Ebenfalls zu erkennen ist ein Sattel 20.

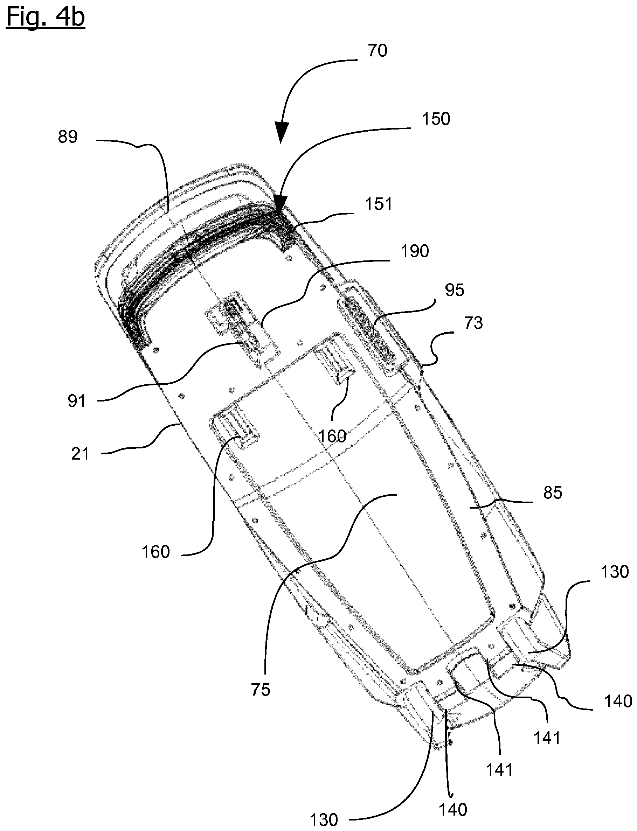

Die Batteriebaugruppe 70 umfasst ein Batteriegehäuse 21 mit einem Frontabschnitt 71, einem Rückabschnitt 72, zwei die Front- und Rückabschnitte 71 und 72 verbindende Seitenabschnitte 73 und einen Bodenabschnitt 75 (siehe hierzu Fig. 4b). Ebenfalls zu erkennen ist ein Betätigungselement 80, das in Form eines Bügelgriffes ausgebildet ist. Der Greifabschnitt 89 ist im in den Motorroller 10 eingebauten Zustand quer zur Fahrtrichtung F angeordnet.

Um ein Umgreifen des Betätigungselements 80, insbesondere des Greifabschnitts 89, zu ermöglichen, weist das Batteriegehäuse 21 im Bereich des Rückabschnitts 72 eine Eingriffsausnehmung 81 auf. Diese Eingriffsausnehmung 81 ist derart ausgebildet, dass das Betätigungselement 80, insbesondere der Greifabschnitt 89, mit der Hand vollständig umgreifbar ist.

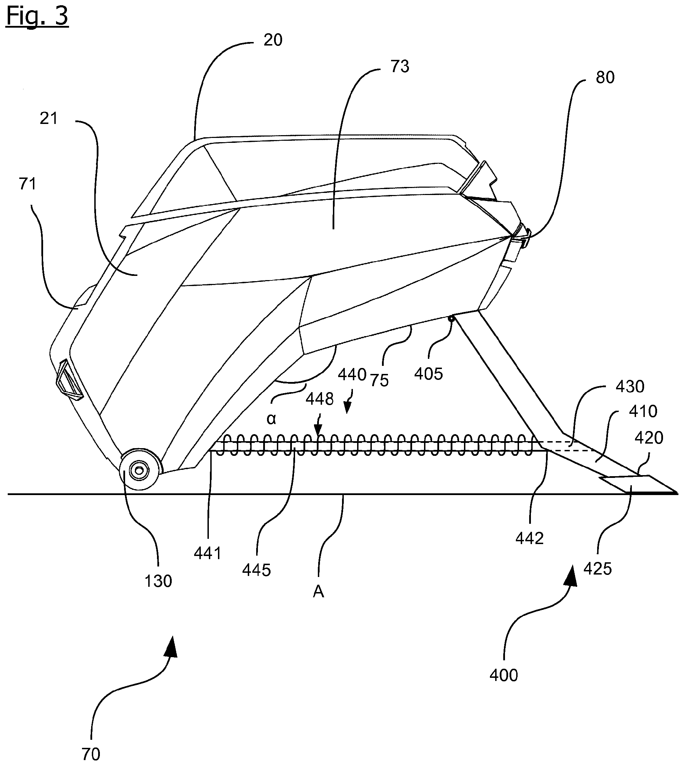

Fig. 3 stellt eine Seitenansicht auf eine weitere Ausführungsform einer erfindungsgemäßen Batteriebaugruppe 70 dar.

Es ist eine Ständervorrichtung 400 zu erkennen. Dies ist im ausgeklappten Zustand dargestellt. Die Ständervorrichtung 400 steht somit vom Batteriegehäuse 21 ab. Die Ständervorrichtung ist mit Hilfe eines Drehgelenks 405 ausgeklappt. Die Ständervorrichtung 400 umfasst zwei Standbeine 410, wobei in der Seitenansicht lediglich ein Standbein 410 zu erkennen ist. Das Standbein 410 ist gerade ausgebildet.

Des Weiteren ist es möglich, dass das Standbein eine der Kontur 415 des Bodenabschnitts 75 komplementäre Form aufweist. Das heißt, dass das Standbein 410 aus zwei winkelig zueinander angeordneten Abschnitten bestehen kann. Diese Abschnitte können den Winkel α einschließen, wie dieser auch in der Kontur 415 des Bodenabschnitts 75 des Batteriegehäuses 21 ausgebildet ist.

Am zum Drehgelenk 405 gegenüberliegenden Ende 420 ist ein Puffer 425 ausgebildet. Der Puffer 425 kann als Flansch ausgebildet sein. Der Puffer 425 ist vorzugsweise aus gummiartigem Material ausgebildet. Die zwei Standbeine 410 sind vorzugsweise über einen Querträger 430, der gestrichelt dargestellt ist, verbunden. Der Querträger 430 dient der Stabilisierung der beiden Standbeine 410.

Vorzugsweise umfasst die Ständervorrichtung 400 eine Spannvorrichtung 440. Diese Spannvorrichtung ist an einem ersten Ende 441 mit dem Batteriegehäuse 21 verbunden. Am zweiten Ende 442 ist die Spannvorrichtung 440 vorzugsweise mit dem Querträger 430 verbunden. Die Spannvorrichtung 440 bewirkt eine Begrenzung der maximal möglichen Ausklappposition der Ständervorrichtung 400 bzw. des Standbeins 410. Die Spannvorrichtung 440 umfasst einen Seilzug 445. Dieser Seilzug begrenzt den Bewegungsweg des Standbeins 410.

Der Seilzug 445 ist vorzugsweise starr bzw. teilelastisch ausgebildet, so dass eine Verlängerung der Spannvorrichtung 440 nicht möglich ist. Der Seilzug 445 ist von einem elastischen Element 448 umgeben. Dieses elastische Element 448 hat eine federnde Wirkung. Sobald das Batteriegehäuse 70 nach oben gehoben wird und das Standbein 410 in Richtung des Batteriegehäuses 21 eingeschwenkt wird, bewirkt das elastische Element 448 ein Einklappen des Standbeins 410. Das elastische Element 448 zieht sich zusammen, so dass die Spannvorrichtung 440 verkürzt wird und somit das Standbein 410 in Richtung des Batteriegehäuses 21 gezogen wird.

Im Batteriegehäuse 21 können sowohl eine USB-Buchse als auch eine Bluetooth-Schnittstelle ausgebildet sein. Des Weiteren ist es möglich, dass im Batteriegehäuse 21 eine derartige Schnittstelle ausgebildet ist, die eine Stromladung eines externen Gerätes, beispielsweise eines Laptops mittels der Batterie der Batteriebaugruppe 70 ermöglicht.

Der Sattel 20 der Batteriebaugruppe 70 ist in dem dargestellten aufgeständerten Zustand, d.h. mit ausgeklappter Ständervorrichtung 400, im gleichen Winkel wie im Fahrmodus oder Fahrzustand der Batteriebaugruppe 70 ausgerichtet.

Insbesondere verläuft der längliche Sattel 20 im Wesentlichen waagrecht zur Abstellfläche A.

Insgesamt kann die Batteriebaugruppe 70 insbesondere im von der zu versorgenden Einheit losgelösten Zustand als eine Art mobiles Büro verwendet werden. Man kann auf dem Sattel 20 bequem sitzen und mittels der im Batteriegehäuse 21 ausgebildeten Schnittstellen seinen Tätigkeiten nachgehen. Demnach ist es möglich, insbesondere einen Aufladevorgang einer Batteriebaugruppe 70 sinnvoll zu nutzen.

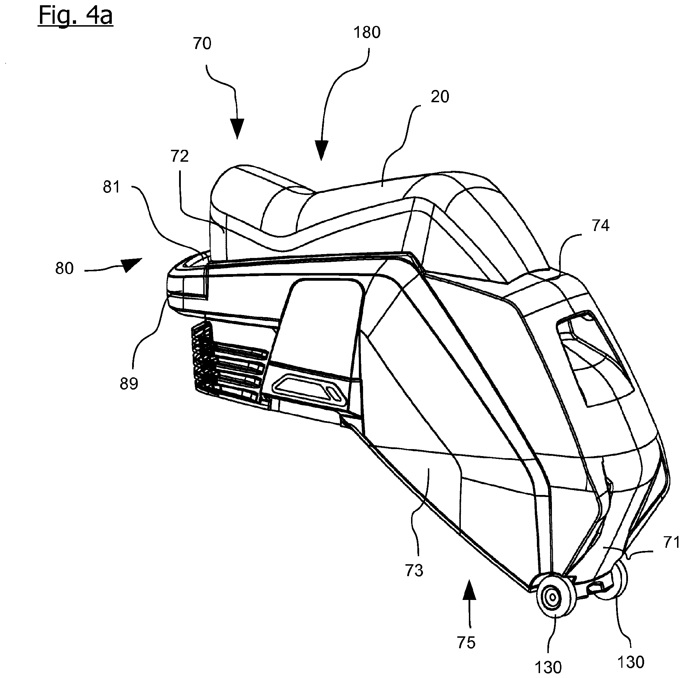

In den Figuren 4a bis 4c ist die Batteriebaugruppe 70 dargestellt. Die Batteriebaugruppe 70 weist zwei Rollen 130 auf. Diese Rollen 130 sind vorzugsweise am Frontabschnitt 71 bzw. am Übergangsabschnitt vom Frontabschnitt 71 zum Bodenabschnitt 75 und zu den Seitenabschnitten 73 des Batteriegehäuses 21 ausgebildet. Mit Hilfe von mindestens zwei Rollen 130 kann die Batteriebaugruppe 70 besonders gleichmäßig gezogen werden.

Der Sattel 20 ist als Element der Batteriebaugruppe 70 ausgebildet. Der Sattel 20 ist vorzugsweise mit dem Batteriegehäuse 21, insbesondere dem Deckelabschnitt 74 des Batteriegehäuses 21, verbunden, insbesondere verklebt und/oder verrastet. Der Sattel 20 ist vorzugsweise aus einem Schaumstoffmaterial gebildet.

Der dargestellte Sattel 20 weist eine ergonomisch vorteilhafte Form auf. Zumindest abschnittsweise ist ein V-förmiges Querschnittsprofil 180 zu erkennen. Das Querschnittsprofil 180 ist vorzugsweise als in Fahrtrichtung F verlaufender Längsschnitt sichtbar. Zumindest abschnittsweise kann der Sattel 20 die Form eines hyperbolischen Paraboloids aufweisen. Quer zur Fahrtrichtung F bzw. parallel zum Greifabschnitt 89 ist ebenfalls eins Querschnittsprofil ausgebildet, wobei dieses Querschnittsprofil zumindest abschnittsweise U-förmig ausgebildet ist.

In Fig. 4b ist der Bodenabschnitt 75 dargestellt. Im Bodenabschnitt 75 ist eine Vertiefung 190 ausbildet, wobei in dieser Vertiefung 190 bzw. Ausnehmung ein Element einer mechanischen Verriegelung 91 ausgebildet ist. Bei der mechanischen Verriegelung 91 handelt es sich um einen Verriegelungshaken. Mit Hilfe des Verriegelungshakens 91, kann die Batteriebaugruppe 70, insbesondere das Batteriegehäuse 21, mit einem Motorroller 10 verbunden werden.

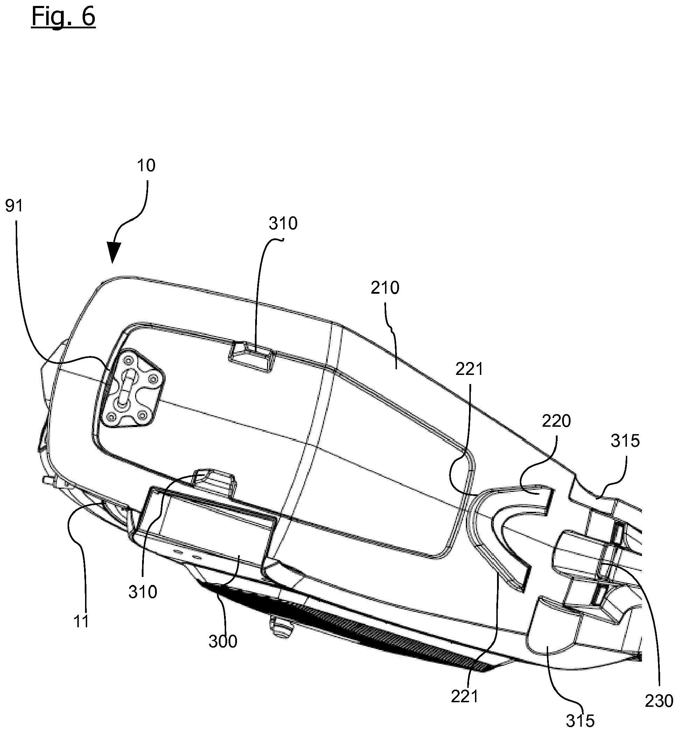

Im Bodenabschnitt 75 des Batteriegehäuses 21 ist eine, insbesondere schlittenartige, Führungsvorrichtung 85 ausgebildet, die auf eine, insbesondere schienenartige, Führungsvorrichtung 210 des Motorrollers 10, geschoben oder schiebbar ist (siehe Fig. 6).

Die Führungsvorrichtung 85 des Batteriegehäuses 21 geht vorzugsweise in Verriegelungsplatten 140 über. Die Verriegelungsplatten 140 werden auf der Führungsvorrichtung 210 der zu versorgenden Einheit 10 geführt bzw. geschoben.

Der Motorroller 10 (siehe Fig. 6) weist vorzugsweise eine Zentrierungshilfe 220 auf. Die Zentrierungshilfe 220 kann beispielsweise als V-förmige Ausformung ausgebildet sein, so dass die Verriegelungsplatten 140 entlang dieser Ausformung 220 geführt werden, um anschließend in Verriegelungsausnehmungen 230 geführt zu werden. Die V-Form der Zentrierungshilfe 220 ist derart auf dem Motorroller 10 ausgebildet, dass der Scheitel des Vs entgegen der Fahrtrichtung F, bzw. in Richtung des hinteren Endes des hinteren Rahmenteils 11 weist. Kanten 141 der Verriegelungsplatten 140 verlaufen beim Aufschieben der Batteriebaugruppe 70 auf den Motorroller 10 entlang der Kanten 221 der Zentrierungshilfe 220.

In Fig. 4b ist außerdem ein kombinierter Strom-/Kommunikationsstecker 95 zu erkennen. Mit Hilfe eines derartigen Steckers 95 kann der Motorroller 10 mit Strom versorgt werden. Des Weiteren kann mit Hilfe eines derartigen kombinierten Strom-/Kommunikationssteckers 95 eine Kommunikationsübertragung bzw. Kommunikationsverbindung zwischen der Batteriebaugruppe 70 und dem Motorroller 10 hergestellt werden. Vorzugsweise weist der kombinierte Strom-/Kommunikationsstecker 95 eine Bus-Schnittstelle auf.

Der kombinierte Strom-/Kommunikationsstecker 95 ist im Bereich des Bodenabschnitts 75 an einem Seitenabschnitt 73 des Batteriegehäuses 21 ausgebildet. Die Pins des Strom-/ Kommunikationssteckers sind vorzugsweise senkrecht zum Bodenabschnitt 75 ausgebildet. Die Verbindung des Strom-/Kommunikationssteckers 95 mit einer Strom-/Kommunikationsbuchse 300 des Motorrollers 10 (siehe Fig. 6), kann demnach durch Aufschieben des Steckers 95 auf die Buchse 300 erfolgen.

Im Zusammenhang mit den Fig. 4b und 6 wird auch klar, dass im Batteriegehäuse 21, insbesondere im Bodenabschnitt 75, mehrere Verriegelungsausnehmungen 160 ausgebildet sein können. Diese Verriegelungsausnehmungen 160 dienen zum Einrasten/Aufnehmen von Verriegelungsausformungen 310 (siehe Fig. 6) des Rahmenteils 11 des Motorrollers 10. Am Motorroller 10 können außerdem Ausnehmungen 315 ausgebildet sein, in die die Rollen 130 der Batteriebaugruppe 70 gleiten können.

Im Batteriegehäuse 21 ist rückabschnittsseitig ein Fach 150 ausgebildet. Dieses Fach 150 ist verschließbar und/oder verriegelbar ausgebildet. Durch Abklappen bzw. Abheben eines entsprechend verschließbaren und/oder verriegelbaren Batteriegehäuseabschnitts bzw. Deckels 151 kann Zugang zu dem Fach 150 hergestellt werden. Vorzugsweise ist in dem Fach 150 ein/das Verriegelungs-Betätigungselement, insbesondere eine/die Schnur oder eine/die Kette und/oder ein/das Band und/oder eine/die Schlaufe (nicht dargestellt), angeordnet. Mit Hilfe einer Schnur oder einer Kette oder mit Hilfe eines Bandes oder einer Schlaufe kann die mechanische Verriegelung 91, insbesondere ein Verriegelungshaken, betätigt werden.

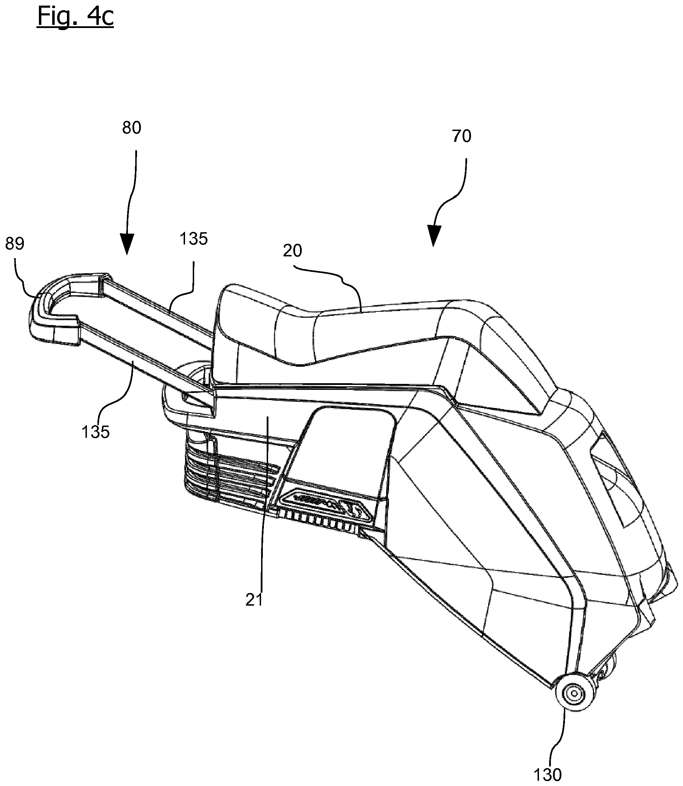

In Fig. 4c ist zu erkennen, dass der Griff 80 als Bügelgriff ausgebildet ist. Der Griff 80 weist einen Greifabschnitt 89 auf, wobei der Greifabschnitt 89 in zwei stangenartige bzw. schienenartige Verlängerungsabschnitte 135 übergeht. Diese Verlängerungsabschnitte 135 sind im dargestellten Zustand aus dem Batteriegehäuse 21 ausgezogen.

In dem dargestellten Benutzungszustand, der dem vom Motorroller 10 losgelösten Zustand der Batteriebaugruppe 70 entspricht, sind die Verlängerungsabschnitte 135 derart aus dem Gehäuse 21 ausgezogen, dass das Betätigungselement 80 in einem zumindest teilweise ausgezogenen, insbesondere teilweise teleskopierten, Zustand vorliegt. Die Batteriebaugruppe 70 kann mit Hilfe der Rollen 130 einfach transportiert werden.

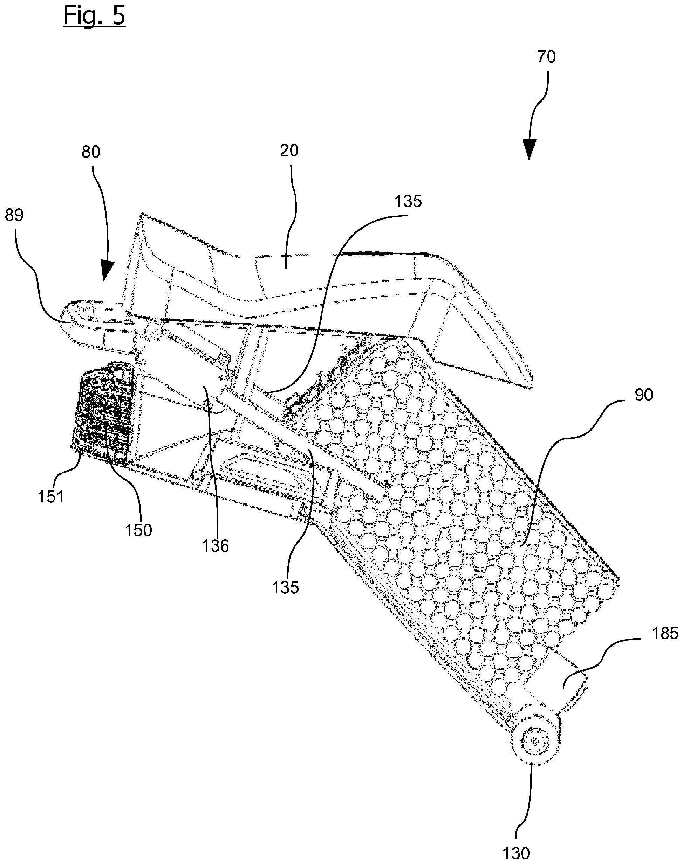

In der Fig. 5 werden in einer teiltransparenten Ansicht (die Batteriegehäuseabschnitte sind hier nicht dargestellt) die im Batteriegehäuse 21 befindlichen Komponenten dargestellt.

Zu erkennen ist, dass der Griff 80 als Bügelgriff ausgebildet ist. Der Griff 80 weist einen Greifabschnitt 89 auf, wobei der Greifabschnitt 89 in zwei stangenartige bzw. schienenartige Verlängerungsabschnitte 135 übergeht. Diese Verlängerungsabschnitte 135 sind im Batteriegehäuse 21 ausziehbar, insbesondere teleskopierbar, gelagert.

In einem ersten Benutzungszustand, der dem Fahrzustand eines elektrischen Motorrollers 10 entspricht, sind die Verlängerungsabschnitte 135 vorzugsweise vollständig im Batteriegehäuse 21 gelagert. Die Verlängerungsabschnitte 135 können in Führungsschienen 136 gelagert sein.

Im Batteriegehäuse 21 zu dem Ausführungsbeispiel gemäß Fig. 5 ist ein Resonanzlautsprecher 185 eingebaut Erfindungsgemäß ist ein Abschnitt, insbesondere der Frontabschnitt 71, des Batteriegehäuses 21 als Resonanzfläche ausgebildet. Der Resonanzlautsprecher 185 ist zwischen der Batterie 90 und einem Abschnitt, insbesondere dem Frontabschnitt 71, des Batteriegehäuses 21 eingebaut.

In Fig. 6 wird ein hinterer Rahmenteil 11 eines Motorrollers 10 dargestellt. Die Wirkweise der Zentrierungshilfe 220, der Buchse 300 sowie der Verriegelungsausformungen 310 ist vorhergehend bereits beschrieben.

Ebenfalls zu erkennen ist ein Teil der mechanischen Verriegelung 91, die eine Verriegelung der Batteriebaugruppe 70 mit dem Motorroller 10 ermöglicht. In den dargestellten Bügel der Verriegelung 91 kann ein Haken der Batteriebaugruppe 70 eingreifen, sodass eine mechanische Verriegelung ermöglicht wird. Durch Betätigen einer Schnur/einer Kette/eines Bandes/einer Schlaufe kann der Haken der Batteriebaugruppe 70 aus dem Bügel gelöst werden, sodass die mechanische Verriegelung gelöst werden kann.

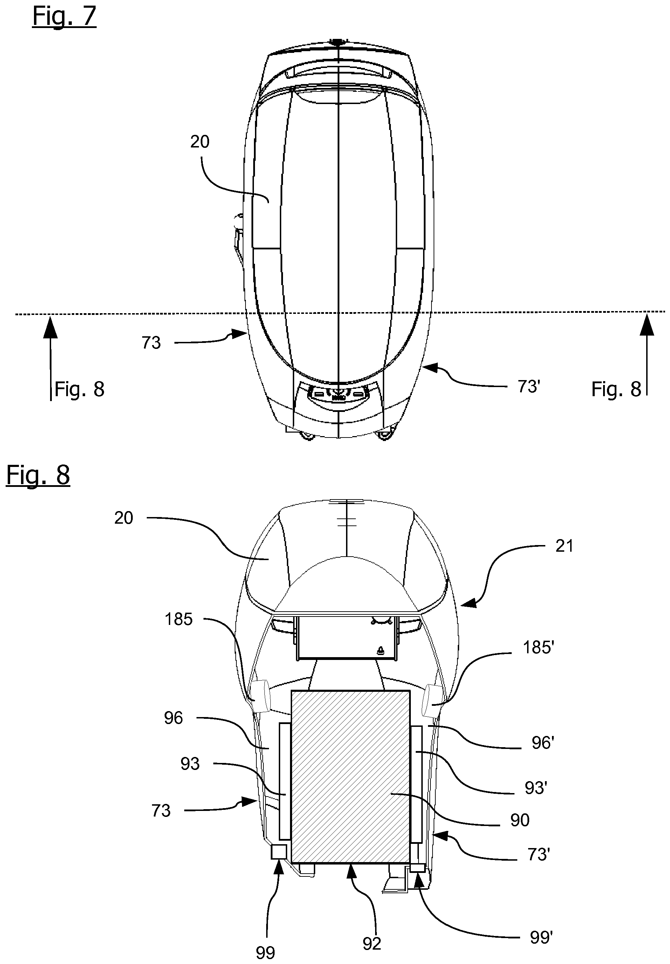

Fig. 7 und 8 zeigen eine weitere Ausführungsform der erfindungsgemäßen Batteriegruppe 70. Die Fig. 7 zeigt die Draufsicht auf die Batteriegruppe 70, wobei der Sattel 20 sowie der linke Seitenabschnitt 73' und der rechte Seitenabschnitt 73 ersichtlich sind. Die Fig. 7 enthält eine Schnittlinie, die eine Schnittebene angibt, die im Wesentlichen quer zur Fahrtrichtung F verläuft.

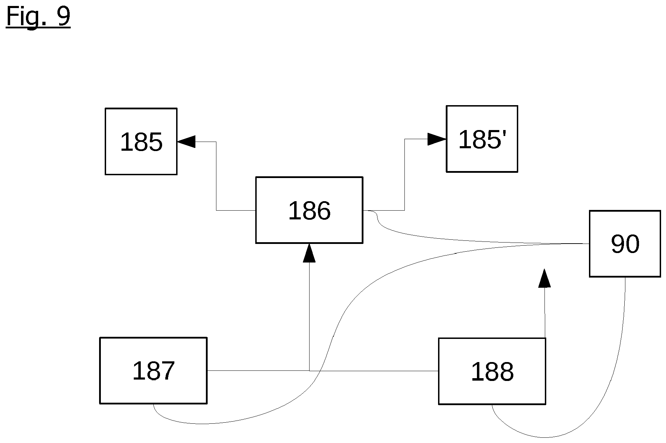

Fig. 8 zeigt den entsprechenden Schnitt. Innerhalb des Batteriegehäuses 21 ist schematisch die Batterie 90 gezeigt, die in einen Batteriekoffer 92 eingeschlossen ist. Zwischen dem Batteriegehäuse 21 und dem Batteriekoffer 92 ergeben sich Hohlräume, die zur Kühlung der Batterie 90 luftdurchströmt sind. Der Hohlraum zwischen dem rechten Seitenabschnitt 63 und dem Batteriekoffer 92 bildet einen rechten Kühlungskanal 96 aus. Dementsprechend bildet der Hohlraum zwischen dem linken Seitenabschnitt 73' und dem Batteriekoffer 92 einen linken Kühlungskanal 96'. Lufteinlässe 99, 99' münden jeweils im unteren Bereich des jeweiligen Kühlungskanals 96, 96' ein und sorgen für einen Lufteinlass. Im hinteren Bereich des Batteriegehäuses 21 sind entsprechende Luftauslässe vorgesehen. In die Kühlungskanäle 96, 96' ragen jeweils Kühlrippen 93 bzw. 93' hinein, die im Wesentlichen entlang einer Strömungsrichtung verlaufen, die durch die durch die durchströmende Luft vorgegeben wird. Ebenfalls innerhalb der Kühlungskanäle 96, 96' befindet sich ein rechter Resonanzlautsprecher 185 bzw. ein linker Resonanzlautsprecher 185'. Der rechte Resonanzlautsprecher 185 ist fest mit dem rechten Seitenabschnitt 73 und der linke Resonanzlautsprecher 185' mit dem linken Seitenabschnitt 73' verbunden. Die Resonanzlautsprecher 185, 185' nutzen also die Seitenabschnitte 73 bzw. 73' als Membran zur Erzeugung von Tönen. Gleichzeitig versetzen die Resonanzlautsprecher 185, 185' das Batteriegehäuse insbesondere die Kühlungskanäle 96, 96', in Schwingung, so dass eine bessere Luftzirkulation erzielt werden kann. In einem Ausführungsbeispiel ist in das Batteriegehäuse 21 ein Verstärker 186 (vgl. Fig. 9) eingebaut. Dieser steht in elektrischer Verbindung mit den Resonanzlautsprechern 185, 185', so dass diese entsprechende Töne erzeugen können.

In einem Ausführungsbeispiel sind weiterhin ein Tongenerator 187 sowie ein Funkmodul 188 (vgl. Fig. 9) vorgesehen. Der Tongenerator 187 kann Töne, beispielsweise ein Brummen erzeugen, so dass der Motorroller 10 akustisch von seiner Umwelt wahrgenommen werden kann. Weiterhin können Audiosignale die über das Funkmodul 188 empfangen werden, abgespielt werden. Hierdurch ist es möglich, dass die Batteriegruppe 70 als mobile Lautsprecher für beliebige Endgeräte, beispielsweise Smartphones eingesetzt werden. Auch ein in den Motorroller 10 integriertes Navigationssystem, kann die Resonanzlautsprecher 185, 185' kabellos oder kabelgebunden nutzen.

In einem Ausführungsbeispiel werden alle oder einige Komponenten der Fig. 9 durch die Batterie 90 elektrisch versorgt.

### Bezugszeichenliste

- 10: Motorroller
- 11: hinterer Rahmenteil
- 12: Vorderrad
- 12': Hinterrad
- 20: Sattel
- 21: Batteriegehäuse
- 30: Lenkeinrichtung
- 70: Batteriebaugruppe
- 71: Frontabschnitt
- 72: Rückabschnitt
- 73: Seitenabschnitt
- 73': Seitenabschnitt
- 74: Deckelabschnitt
- 75: Bodenabschnitt
- 80: Betätigungselement
- 81: Eingriffsausnehmung
- 85: schlittenartige Führungsvorrichtung
- 89: Greifabschnitt
- 90: Batterie
- 91: mechanische Verriegelung
- 92: Batteriekoffer
- 93, 93': Kühlrippe
- 95: kombinierter Strom-/Kommunikationsstecker
- 96, 96': Kühlungskanal
- 99, 99': Lufteinlass
- 100: Anzeigeeinheit
- 130: Rolle
- 135: Verlängerungsabschnitt
- 136: Führungsschiene
- 140: Verriegelungsplatte
- 141: Kante Verriegelungsplatte
- 150: Fach
- 151: Deckel
- 160: Verriegelungsausnehmung
- 180: Querschnittsprofil
- 185, 185': Lautsprecher
- 186: Verstärker
- 187: Tongenerator
- 188: Funkmodul
- 190: Vertiefung
- 210: Führungsvorrichtung Motorroller
- 220: Zentrierungshilfe
- 221: Kante Zentrierungshilfe
- 230: Verriegelungsausnehmung
- 300: kombinierte Strom-/Kommunikationsbuchse
- 310: Verriegelungsausformung
- 315: Ausnehmung
- 400: Ständervorrichtung
- 405: Drehgelenk
- 410: Standbein
- 415: Kontur
- 420: Ende Standbein
- 425: Puffer
- 430: Querträger
- 440: Spannvorrichtung
- 441: erstes Ende Spannvorrichtung
- 442: zweites Ende Spannvorrichtung
- 445: Seilzug
- 448: elastisches Element

- A: Abstellfläche
- F: Fahrtrichtung
- Z: Zugrichtung
- α: Winkel

## Patentansprüche

1. Batteriebaugruppe (70), insbesondere für ein elektrisch antreibbares Motorfahrzeug, insbesondere für ein Motorrad, vorzugsweise für einen Motorroller (10), umfassend:
- mindestens ein Batteriegehäuse (21);
- mindestens eine, insbesondere wiederaufladbare, Batterie (90);
- mindestens einen Resonanzlautsprecher (185, 185'), der über überhaupt keine eigene Membran verfügt und derart an einem Abschnitt (73, 73') des Batteriegehäuses (21) angeordnet ist, dass zumindest ein Teil des Batteriegehäuses (21) zum Schwingen angeregt wird, um als Lautsprechermembran zu dienen.

2. Batteriebaugruppe (70) nach Anspruch 1,
**gekennzeichnet durch**:
mindestens zwei Resonanzlautsprecher (185, 185'), die jeweils wechselseitig, insbesondere links- und rechtsseitig in Bezug auf die Fahrrichtung (F) des Motorfahrzeugs am Batteriegehäuse (21) angeordnet sind.

3. Batteriebaugruppe (70) nach Anspruch 1 oder 2,
**gekennzeichnet durch**:
mindestens einen Kühlungskanal (96, 96') mit mindestens einem Lufteinlass (99, 99') und einem Luftauslass zur Kühlung der Batterie (90), wobei der Resonanzlautsprecher (185, 185') in dem Kühlungskanal (96, 96') angeordnet ist, und/oder
der vom Resonanzlautsprecher (185, 185') zum Schwingen angeregte Abschnitt (73, 73') ein Teil des Kühlungskanals (96, 96') ist.

4. Batteriebaugruppe (70) nach einem der vorhergehenden Ansprüche, insbesondere nach Anspruch 3,
**gekennzeichnet durch**
eine Batteriekapsel (92) zur Aufnahme der Batterie (90), wobei der mindestens eine Kühlungskanal (96, 96') mindestens abschnittsweise durch eine Außenhülle der Batteriekapsel (92) und dem Batteriegehäuse (21), das vorzugsweise aus Kunststoff ausgebildet ist, begrenzt wird.

5. Batteriebaugruppe (70) nach einem der vorhergehenden Ansprüche, insbesondere nach Anspruch 4,
**dadurch gekennzeichnet, dass**
die Batteriekapsel (92) eine Leistungselektronik zum Betreiben des Motorfahrzeugs enthält.

6. Batteriebaugruppe (70) nach einem der vorhergehenden Ansprüche, insbesondere nach einem der Ansprüche 4 oder 5,
**dadurch gekennzeichnet, dass**
die Batteriekapsel (92) im Wesentlichen aus einem wärmeleitfähigen Material, insbesondere aus einem Metall, beispielsweise einer Aluminiumlegierung, ausgebildet ist.

7. Batteriebaugruppe (70) nach einem der vorhergehenden Ansprüche, insbesondere nach einem der Ansprüche 4 bis 6
**dadurch gekennzeichnet, dass**
die Batteriekapsel (92) Lamellen (93, 93') umfasst, die in den Kühlungskanal (96, 96') hineinragen.

8. Batteriebaugruppe (70) nach einem der vorhergehenden Ansprüche, insbesondere nach einem der Ansprüche 3 bis 7
**dadurch gekennzeichnet, dass**
der Lufteinlass (99, 99') im untern und/oder vorderen Bereich der Batteriebaugruppe (70) angeordnet ist.

9. Batteriebaugruppe (70) nach einem der vorhergehenden Ansprüche, **gekennzeichnet durch**
einen Verstärker (186) zum Betreiben des Resonanzlautsprechers (185, 185'), wobei der Verstärker (186) vorzugsweise Audiosignale von einem Funkmodul (188), insbesondre einem Bluetooth-Modul, empfängt.

10. Elektrisch antreibbares Motorfahrzeug, insbesondere Motorrad, vorzugsweise Motorroller (10), umfassend mindestens eine, insbesondere abnehmbare, Batteriebaugruppe (70) nach einem der Ansprüche 1 bis 9.

11. Motorfahrzeug nach Anspruch 10,
**gekennzeichnet durch**
einen Tongenerator (187), wobei der Tongenerator (187) mit dem Motorfahrzeug in kommunikativer Verbindung steht, um den Fahrzustand des Motorfahrzeugs zu erfassen und in Abhängigkeit von dem erfassten Fahrzustand einen oder mehrere Töne unter Verwendung des mindestens einen Resonanzlautsprecher (185, 185') zu erzeugen.

12. Motorfahrzeug nach Anspruch 11,
**dadurch gekennzeichnet, dass**
der Tongenerator (187) dazu ausgebildet ist, eine Lautstärke und/oder eine Wiederholungsfrequenz des erzeugten Tons bzw. der erzeugten Töne in Abhängigkeit von einer erfassten Geschwindigkeit des Motorfahrzeugs anzupassen.

## Claims

1. A battery assembly (70), in particular for an electrically drivable motor vehicle, in particular for a motor bike, preferably for a motor scooter (10), comprising:
- at least one battery housing (21);
- at least one, in particular rechargeable battery (90);
- at least one resonance loudspeaker (185, 185') having no membrane of its own at all and being arranged at a portion (73, 73') of the battery housing (21) such that at least a part of the battery housing (21) is caused to oscillate so as to serve as a loudspeaker membrane.

2. The battery assembly (70) according to claim 1,
**characterized by**
at least two resonance loudspeakers (185, 185') each arranged at the battery housing (21) at alternating sides, in particular at the right and left side with respect to the travel direction (F) of the motor vehicle.

3. The battery assembly (70) according to claim 1 or 2,
**characterized by**
at least one cooling channel (96, 96') having at least one air inlet (99, 99') and one air outlet for cooling the battery (90), wherein the resonance loudspeaker (185, 185') is disposed within the cooling channel (96, 96'), and/or
the portion (73, 73') caused to oscillate by the resonance loudspeaker (185, 185') is a part of the cooling channel (96, 96').

4. The battery assembly (70) according to any one of the preceding claims, in particular according to claim 3,
**characterized by**
a battery capsule (92) for receiving the battery (90), wherein the at least one cooling channel (96, 96'), at least in sections, is delimited by an outer envelope of the battery capsule (92) and the battery housing (21) that is preferably formed of plastics.

5. The battery assembly (70) according to any one of the preceding claims, in particular according to claim 4,
**characterized in that**
the battery capsule (92) contains power electronics for operating the motor vehicle.

6. The battery assembly (70) according to any one of the preceding claims, in particular according to any one of claims 4 or 5,
**characterized in that**
the battery capsule (92) is essentially formed of a heat-conductive material, in particular of a metal, for example an aluminum alloy.

7. The battery assembly (70) according to any one of the preceding claims, in particular according to any one of claims 4 to 6,
**characterized in that**
the battery capsule (92) comprises lamellae (93, 93') protruding into the cooling channel (96, 96').

8. The battery assembly (70) according to any one of the preceding claims, in particular according to any one of claims 3 to 7,
**characterized in that**
the air inlet (99, 99') is disposed in the lower and/or front area of the battery assembly (70).

9. The battery assembly (70) according to any one of the preceding claims,
**characterized by**
an amplifier (186) for operating the resonance loudspeaker (185, 185'), wherein the amplifier (186) preferably receives audio signal from a radio module (188), in particular a Bluetooth module.

10. An electrically drivable motor vehicle, in particular motor bike, preferably motor scooter (10) comprising at least one, in particular removable battery assembly (70) according to any one of claims 1 to 9.

11. The motor vehicle according to claim 10,
**characterized by**
a sound generator (187), wherein the sound generator (187) is in communicative connection with the motor vehicle in order to detect the driving state of the motor vehicle and to generate one or more sounds as a function of the detected driving state using the at least one resonance loudspeaker (185, 185').

12. The motor vehicle according to claim 11,
**characterized in that**
the sound generator (187) is configured to adapt a volume and/or repetition frequency of the generated sound or the generated sounds as a function of the detected speed of the motor vehicle.

## Revendications

1. Ensemble de batterie (70), en particulier pour un véhicule à moteur entraînable électriquement, en particulier pour une moto, de préférence pour un scooter (10), comprenant :
- au moins un boîtier de batterie (21) ;
- au moins une batterie (90), en particulier rechargeable ;
- au moins un haut-parleur à résonance (185, 185') qui ne dispose d'aucune membrane propre et qui est disposé au niveau d'une section (73, 73') du boîtier de batterie (21) de telle manière qu'au moins une partie du boîtier de batterie (21) soit excitée à osciller pour servir de membrane de haut-parleur.

2. Ensemble de batterie (70) selon la revendication 1,
**caractérisé par**
au moins deux haut-parleurs à résonance (185, 185') qui sont respectivement disposés en alternance au niveau du boîtier de batterie (21), en particulier du côté gauche et du côté droit par rapport au sens de la marche (F) du véhicule à moteur.

3. Ensemble de batterie (70) selon la revendication 1 ou 2,
**caractérisé par**
au moins un canal de refroidissement (96, 96') pourvu d'au moins une entrée d'air (99, 99') et d'une sortie d'air pour le refroidissement de la batterie (90), sachant que le haut-parleur à résonance (185, 185') est disposé dans le canal de refroidissement (96, 96'), et/ou
la section (73, 73') excitée à osciller par le haut-parleur à résonance (185, 185') est une partie du canal de refroidissement (96, 96').

4. Ensemble de batterie (70) selon l'une des revendications précédentes, en particulier selon la revendication 3,
**caractérisé par**
une capsule de batterie (92) pour le logement de la batterie (90), sachant que l'au moins un canal de refroidissement (96, 96') est délimité au moins par sections par une enveloppe extérieure de la capsule de batterie (92) et par le boîtier de batterie (21) qui est de préférence constitué de matière plastique.

5. Ensemble de batterie (70) selon l'une des revendications précédentes, en particulier selon la revendication 4,
**caractérisé en ce que**
la capsule de batterie (92) contient une électronique de puissance pour le fonctionnement du véhicule à moteur.

6. Ensemble de batterie (70) selon l'une des revendications précédentes, en particulier selon l'une des revendications 4 ou 5,
**caractérisé en ce que**
la capsule de batterie (92) est constituée essentiellement d'un matériau conducteur de chaleur, en particulier d'un métal, par exemple un alliage d'aluminium.

7. Ensemble de batterie (70) selon l'une des revendications précédentes, en particulier selon l'une des revendications 4 à 6,
**caractérisé en ce que**
la capsule de batterie (92) comprend des lamelles (93, 93') qui pénètrent à l'intérieur du canal de refroidissement (96, 96').

8. Ensemble de batterie (70) selon l'une des revendications précédentes, en particulier selon l'une des revendications 3 à 7,
**caractérisé en ce que**
l'entrée d'air (99, 99') est disposée dans la zone inférieure et/ou avant de l'ensemble de batterie (70).

9. Ensemble de batterie (70) selon l'une des revendications précédentes,
**caractérisé par**
un amplificateur (186) pour le fonctionnement du haut-parleur à résonance (185, 185'), sachant que l'amplificateur (186) reçoit de préférence des signaux audio depuis un module radio (188), en particulier un module Bluetooth.

10. Véhicule à moteur entraînable électriquement, en particulier moto, de préférence scooter (10), comprenant au moins un ensemble de batterie (70), en particulier amovible, selon l'une des revendications 1 à 9.

11. Véhicule à moteur selon la revendication 10,
**caractérisé par**
un générateur de son (187), sachant que le générateur de son (187) est en liaison communicationnelle avec le véhicule à moteur, pour saisir l'état de marche du véhicule à moteur et générer un ou plusieurs sons en fonction de l'état de marche saisi moyennant l'au moins un haut-parleur à résonance (185, 185').

12. Véhicule à moteur selon la revendication 11,
**caractérisé en ce que**
le générateur de son (187) est constitué pour adapter une intensité et/ou une fréquence de répétition du son généré ou des sons générés en fonction d'une vitesse saisie du véhicule à moteur.
